# EUROPEAN PATENT SPECIFICATION

(11) **EP 4 597 376 B1**
(45) Date of publication and mention of the grant of the patent: **01.04.2026**
(21) Application number: 24155173.8
(22) Date of filing: 01.02.2024
(51) Int. Cl.: G06N 10/40, G21K 1/00

(54) **SWITCHING DEVICES AND ARRANGEMENTS FOR AN ELECTRODE OF AN ION TRAP DEVICE**
SCHALTVORRICHTUNGEN UND ANORDNUNGEN FÜR EINE ELEKTRODE EINER IONENFALLE
DISPOSITIFS DE COMMUTATION ET AGENCEMENTS POUR UNE ÉLECTRODE D'UN DISPOSITIF DE PIÈGE À IONS

(43) Date of publication of application: 06.08.2025
(73) Proprietor: Infineon Technologies Austria AG, 9500 Villach (AT)
(72) Inventor: BRANDL, Matthias, 85614 Kirchseeon (DE)
(74) Representative: Infineon Patent Department

(56) References cited:
- WO-A1-2023/007189
- US-A- 4 715 015
- US-A1- 2022 037 313
- US-A1- 2024 006 092
- MALINOWSKI M. ET AL: "How to Wire a 1000-Qubit Trapped-Ion Quantum Computer", vol. 4, no. 4, 19 October 2023 (2023-10-19), XP093165319, ISSN: 2691-3399, Retrieved from the Internet <URL:https://journals.aps.org/prxquantum/pdf/10.1103/PRXQuantum.4.040313> DOI: 10.1103/PRXQuantum.4.040313

## Description

### TECHNICAL FIELD

The present disclosure relates to the field of quantum computing, and in particular, to ion trap devices that include electrodes.

### BACKGROUND

There is growing interest and rapid development in the field of quantum computing. One particular type of quantum computing environment is a trapped ion environment, in which computing is performed using ions as qubits for computation. The excitation state of an electron of an ion indicates a logical value or logic state. Ions such as barium (Ba), magnesium (Mg), calcium (Ca), beryllium (Be), or the like, may be positively charged, and a single electron in the outer shall of the ion used as the logic element. Two or more ions may be entangled, as changing the state of one qubit causes the entangled qubits to change their state immediately, having the potential to provide substantial speed and power savings over conventional computing.

Quantum computing requires a well-controlled environment, and precise handling of the ions. Generally, ions in a trapped ion device, also referred to as a trapped ion quantum computing (TIQC) system, are trapped or controlled using electromagnetic fields.

For example, ions may be moved between locations (e.g., storage, processing and readout locations) in a process called ion shuttling. In order to control the ion movement, electrodes are controlled to provide an intended electric field (E-field). Therefore, accurate control of the E-fields created by the electrodes in the trapped ion device is desired. For example, it would be advantageous to reduce any noise or other undesired fluctuations of voltage that is provided to the electrode, which may cause fluctuations of the E-field experienced by the ion(s), as the location and movement of the ion(s) may be sensitive even to subtle changes in the E-field provided by the electrode.

US 2022/037313 A1 discloses an ion trap device comprising at least one switching device for controlling a connection between a signal line and an electrode for the ion trap device, each switching device comprising a capacitance arrangement connected between the electrode and a ground or reference voltage.

### SUMMARY

There is provided an ion trap device comprising at least one switching device for controlling a connection between a signal line and an electrode for the ion trap device. Each switching device comprises: a capacitance arrangement connected between the electrode and a ground or reference voltage; a dummy capacitance arrangement connected to the ground or reference voltage, wherein a capacitance of the dummy capacitance arrangement is within 10% of a capacitance of the capacitance arrangement; and a switching arrangement configured to selectively connect the signal line to the electrode of the ion trap device and selectively connect the signal line to the dummy capacitance arrangement.

There is also provided a method for controlling a connection between a signal line and an electrode of an ion trap device. The method comprises: disconnecting the signal line from a dummy capacitance arrangement and connecting the signal line to the electrode; and disconnecting the signal line from the electrode and connecting the signal line to the dummy capacitance arrangement. A capacitance arrangement is connected between the electrode and a ground or reference voltage; and the dummy capacitance arrangement is connected to the ground or reference voltage, wherein a capacitance of the dummy capacitance arrangement is within 10% of a capacitance of the capacitance arrangement.

Those skilled in the art will recognize additional features and advantages upon reading the following detailed description, and upon viewing the accompanying drawings.

### BRIEF DESCRIPTION OF THE DRAWINGS

The present disclosure is illustrated by way of example, and not by way of limitation, in the figures of the accompanying drawings in which like reference numerals refer to similar or identical elements. The elements of the drawings are not necessarily to scale relative to each other. The features of the various illustrated examples can be combined unless they exclude each other.
Fig. 1 illustrates a portion of an ion trap device comprising a proposed switching device.
Fig. 2 illustrates a portion of an ion trap device comprising another proposed switching device.
Fig. 3 illustrates a portion of an ion trap device comprising a proposed switching device arrangement.
Fig. 4 illustrates a portion of an ion trap device comprising another proposed switching device arrangement.
Fig. 5 illustrates a portion of an ion trap device comprising another proposed switching device arrangement.
Fig. 6 illustrates a portion of an ion trap device comprising multiple proposed switching device arrangements.

### DETAILED DESCRIPTION

The examples described herein provide a mechanism for maintaining a capacitance seen by one or more signal lines of an ion trap device. For each controllable connection between a signal line and an electrode of the ion trap device, a switching device or switching arrangement selectively couples the signal line to a capacitance for the electrode or to a dummy capacitance, to thereby maintain a similar output capacitance for the signal line.

In an ion trap device, also known as a trapped ion quantum circuit (TIQC), there is commonly a desire to control the location of an ion that is being held within a containment region (e.g., by at least an RF system or a static magnetic field). This can be to facilitate movement of the ion between different locations, each designated for the performance of different quantum computing tasks (e.g., storage, processing and/or readout).

Moving an ion in a containment region of an ion trap device typically requires manipulating the electric field that surrounds the ion. Appropriate manipulation of the electric field surrounding the ion can therefore be used to control the location of the ion. There is therefore a need to facilitate precise and accurate control of the electric field surrounding an ion.

A typical ion trap device or TIQC will control the voltage provided to each of a plurality of electrodes surrounding or bounding the containment region in which the ion is to be held. In other words, electrodes in a proximity of an ion are typically used to trap and/or move the ion. Typically, each electrode is associated with a corresponding capacitance arrangement, e.g., connected to one side of a capacitance arrangement. More particularly, a respective capacitance arrangement may connect an electrode to a ground or reference voltage.

In some types of TIQC, such as Paul traps, electrodes of the TIQC have to be shunted to a ground or reference voltage, e.g., due to the use of an RF system to hold the ion within a containment region. In such types of TIQC, the capacitance arrangement may comprise a purposively integrated shunt capacitance arrangement, as well as other forms of capacitance (e.g., a parasitic capacitance).

However, in other types of TIQC, such as Penning traps, a capacitance will still exist between the electrode and the ground or reference voltage. This capacitance may include at least a parasitic capacitance and, optionally, a decoupling or filtering capacitance arrangement, such as one chosen to decrease thermal noise and/or Johnson-Nyquist noise.

To control the voltage at an electrode of a TIQC, it is common for the TIQC to selectively connect one or more signal lines (e.g., signal lines that are connected to a voltage source, such as a digital-to-analog converter) to the electrode. Usually only one signal line is connected to any given electrode at a time. However, a single signal line may be connected to varying number of electrodes at a same time (such as five, ten or even hundreds), depending upon the control scheme for the electrode(s).

The present disclosure recognizes that the (dis)connection of an electrode from a signal line will change the capacitance seen by the signal line. This may be problematic in at least two respects.

Firstly, if the signal line is undergoing a change in voltage (e.g., according to some control scheme), then the speed of the voltage change at any connected electrode will be responsive to the total capacitance seen by the signal line. If multiple signal lines are undergoing a same voltage ramp (e.g., having a same voltage offset added thereto), then the speed of voltage change (i.e., slew rate) on different signal lines will be different if they see different capacitances.

This is disadvantageous, as there is commonly a desire or demand to set a voltage offset (such as a voltage pulse) to multiple different electrodes (via multiple different signal lines) at a same time. It has been recognized that if a capacitance seen by different signal lines is different, then the change in voltage (when adding this voltage offset), i.e., the slew rate, will differ for different groups of electrodes. This can cause unexpected or erroneous behavior for any ions responsive to the electrodes. This effect is particularly enhanced when the TIQC comprises, for each of two or more signal lines, a large number of electrodes to be driven by said signal line, e.g., five, ten or even hundreds of electrodes.

As an example, the (total) capacitance perceived by a signal line will change significantly if connected to five electrodes compared to when connected to only a single electrode. Thus, different signal lines, connected to different numbers of electrodes, may disadvantageously see different capacitances, resulting in different slew rates.

More particularly, the movement of an ion is responsive to voltages on electrodes in the vicinity of the ion. Performing sufficiently accurate ion movement requires extremely accurate voltage control. For instance, it has been observed that deviations of between 5 mV to 60 mV may "kick" the ion(s) so that they will be in a high motional state after a movement. That means even tiny differences in the slew rate at different electrodes may deteriorate the ion motion fidelity to stay in the motional ground state.

Secondly, if a signal line is connected to an electrode, then a current will flow from the signal line to the electrode, e.g., along an electrode-connecting wire. This current will change magnitude as a result of any control scheme performed using the electrode. The current flow will naturally induce a magnetic field, which can influence or affect (the phase shift of) one or more ions trapped or held by the TIQC (which does not necessarily have to be the same ion(s) as controlled by the electrode, depending upon the circuitry layout of the TIQC). It is possible to compensate for this magnetic field, whilst the signal line is connected to the electrode, through appropriate control schemes, e.g., by modelling the known effect of the magnetic field(s).

However, it is herein recognized that if the signal line is disconnected from the electrode, then this induced magnetic field will change or reduce. Left unaddressed, this will cause uncalibrated or uncontrolled phase shifting of an ion held or trapped by the TIQC. This effect becomes pronounced when the TIQC comprises a large number of electrodes to be driven by the same signal line, e.g., five, ten or even hundreds of electrodes, and the number of electrodes connected to the same signal line (by respective connecting arrangements) changes significantly. In such scenarios, the magnetic field(s) induced by current flow to electrodes can change uncontrolled.

The present disclosure may provide a mechanism for at least partially overcoming the above-identified problems. In particular, the proposed mechanism may reduce a change in capacitance seen by any one of the signal lines when (dis)connecting to any electrode. This helps to maintain the apparent load seen by the signal line and causes a similar current flow (and therefore induced magnetic field) when the electrode is connected and disconnected from the signal line.

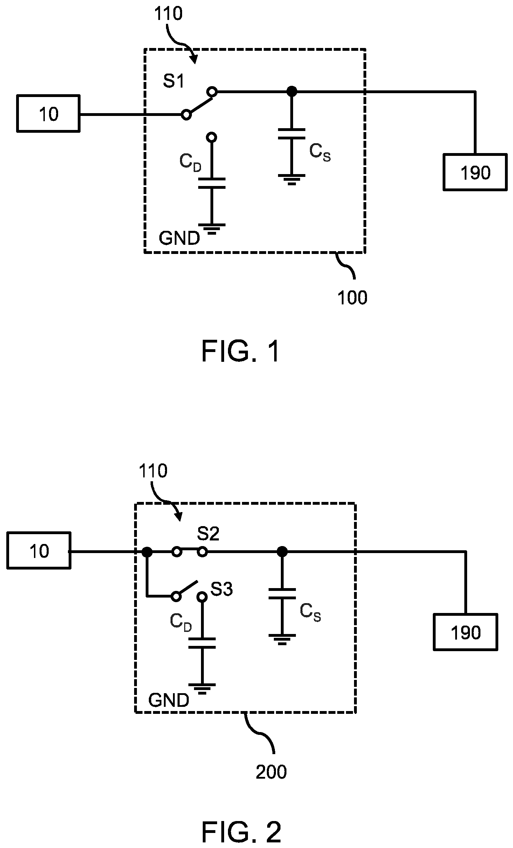

Fig. 1 illustrates a portion of an ion trap device. More particularly, Fig. 1 illustrates a switching device 100 for controlling a connection between a signal line 10 and an electrode 190. The switching device 100 comprises a capacitance arrangement C_{S}, a dummy capacitance arrangement C_{D} and a switching arrangement 110.

The capacitance arrangement C_{S} is connected between the electrode 190 and a ground or reference voltage GND. The capacitance of the capacitance arrangement includes at least the capacitance of any capacitor and/or parasitic capacitance formed between the electrode 190 and the ground or reference voltage GND.

In some examples, such as those designed for a Paul trap, the capacitance arrangement C_{S} comprises shunt capacitance arrangement. The shunt capacitance arrangement may comprise an arrangement of one or more capacitors, e.g., a single capacitor (as illustrated), that connects the electrode 190 to a ground or reference voltage GND. Other suitable arrangements of capacitors will be apparent to the skilled person, e.g., two or more capacitors connected in series and/or parallel.

In some examples, the capacitance arrangement C_{S} comprises a decoupling or filtering capacitance arrangement, such as one chosen to decrease thermal noise and/or Johnson-Nyquist noise.

It will be appreciated that the capacitance arrangement C_{S} will, in practice, comprise any parasitic capacitance between the electrode 190 and the ground or reference voltage GND.

The dummy capacitance arrangement C_{D} is connected to the ground or reference voltage GND. In practice, the dummy capacitance arrangement C_{D} may comprise an arrangement of one or more capacitors, e.g., a single capacitor (as illustrated), that connects to a ground or reference voltage GND. A capacitance of the dummy capacitance arrangement is within 10% of a capacitance of the capacitance arrangement, e.g., within 5% of a capacitance of the capacitance arrangement, e.g., within 1% of a capacitance of the capacitance arrangement. In preferred examples, the capacitance of the dummy capacitance arrangement is substantially equal to the capacitance of the capacitance arrangement, e.g., equal taking into account acceptable manufacturing tolerances in the field of capacitor manufacture.

The capacitance arrangement C_{S} and the dummy capacitance arrangement C_{D} may be electrically isolated from one another.

The switching arrangement 110 is configured to selectively connect the signal line 10 to the electrode 190 (and therefore the capacitance arrangement C_{S}). The switching arrangement 110 is also configured to selectively connect the signal line to the dummy capacitance arrangement C_{D}.

More particularly, the switching arrangement 110 is configured to selectively connect the signal line 10 to only one of the electrode 190 and the dummy capacitance arrangement C_{D} (i.e., always one of the two and not both simultaneously).

Thus, there are two effective modes of operation for the switching arrangement. In a first mode of operation, the switching arrangement 110 connects the signal line 10 to the electrode. In a second mode of operation, the switching arrangement 110 connects the signal line 10 to the dummy capacitance arrangement C_{D}. The capacitance seen or perceived by the signal line 10 remains substantially the same between the two modes of operation.

For example, the switching arrangement 110 may switch the signal line 10 from being connected to the electrode 190 to being connected to the dummy capacitance arrangement C_{D} and vice versa (e.g., using zero-voltage switching).

In this way, the (total) capacitance seen by the signal line 10 (with respect to the switching device 100) can be kept substantially the same. More particularly, the change in capacitance seen by the signal line will may be reduced compared to approaches in which no dummy capacitance arrangement is provided. By keeping the capacitance of the dummy capacitance arrangement and the capacitance arrangement substantially the same (e.g., within 10%, e.g., within 5%, e.g., within 1%), any change in capacitance seen by the signal line 10 as a result of connecting or disconnecting the electrode 190 from the signal line 10 is significantly reduced.

Reducing a change in capacitance seen by the signal line is advantageous to avoiding any sudden change in slew rate for a change in voltage of a signal line regardless of whether the switching arrangement is operating in the first or second mode of operation. Reducing a change in capacitance is also advantageous in that a (cumulative or total) current flow away from the signal line, and correspondingly any induced magnetic field, may also remain substantially the same regardless of the mode of operation (i.e., whether operating in the first or second mode of operation).

From the foregoing, it will be appreciated that the proposed approach facilitates the provision of the same, or nearly the same, voltage application by the signal line because the load perceived by the signal line(s) does not change. The proposed approach also advantageously provides the same (or nearly the same) magnetic field fluctuations on the trap because the same (or nearly the same) current always flows from the signal line.

Embodiments are particularly advantageous when the physical position of the capacitance arrangement is proximate to the physical position of the dummy capacitance arrangement. This acts to effectively maintain a similar or same magnetic field induced by a wire connecting the switching arrangement to the electrode as to that induced by a wire connected the switching arrangement to the dummy capacitance arrangement. This significantly reduces any change in magnetic field seen or perceived by any ions trapped by the ion trap device, i.e., reduces any fluctuations (or change in fluctuation pattern(s)) in any magnetic field induced by driving the electrode(s).

Embodiments are further advantageous when the length of a conductive element connecting the capacitance arrangement to the switching arrangement is substantially the same (e.g., ±10% or ±20%) to the length of a conductive element connecting the dummy capacitance arrangement to the switching arrangement. This more closely aligns the induced magnetic field when connected to the dummy capacitance arrangement as when connected to the capacitance arrangement. In particular, this approach also reduces any change in magnetic field seen or perceived by any ions trapped by the ion trap device, i.e., reduces any fluctuations (or change in fluctuation pattern(s)) in any magnetic field induced by driving the electrode(s).

The operation of the switching arrangement may be controlled by a control arrangement (not illustrated in Figure 1) that provides one or more signals for controlling the operation of the switching arrangement. In particular, the switching arrangement may be configured to responsive to a first signal, disconnect the signal line from the dummy capacitance arrangement and connect the signal line to the electrode; and responsive to a second signal, disconnect the signal line from the electrode and connect the signal line to the dummy capacitance arrangement.

The first signal may be an indication to connect the signal line to the electrode. The second signal may be an indication to disconnect the signal line from the electrode.

In the example illustrated by Figure 1, the switching arrangement 110 may comprise a single pole double throw (SPDT) switch S1. Thus, the SPDT switch S1 has a single input terminal (connected to the signal line 10) and two output terminals (one connected to the electrode 190, the other to the dummy capacitance arrangement C_{D}). Approaches for embodying such a SPDT are well known to the appropriately skilled person.

Fig. 2 also illustrates a portion of an ion trap device, but illustrating an alternative switching device 200 for controlling a connection between a signal line 10 and an electrode 190.

The switching device 200 differs from the previously described switching device 200 only in that the switching arrangement 110 is instead formed from two switches S2, S3, such as two single pole single throw (SPST) switches S2, S3 (e.g., two transistors). The switches S2, S3 should be controlled synchronously, such that only one switch is closed at a same time. The control logic for the switching device 200 may be more complex than the previously disclosed example, but may form a more compact switching device.

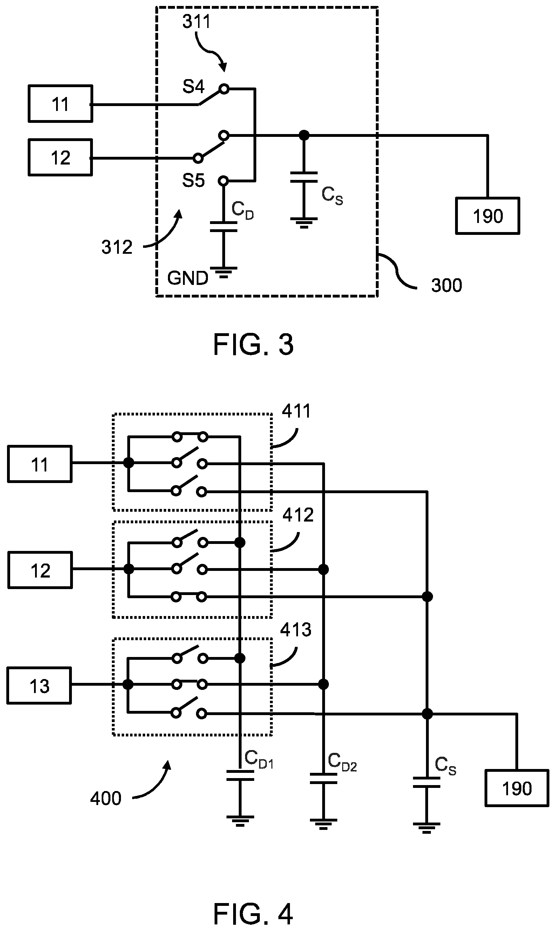

Fig. 3 also illustrates a portion of an ion trap device, illustrating a switching device arrangement 300. This switching device arrangement 300 is configured for controlling a connection between a plurality of (here: two) signal lines 11, 12 and a (single) electrode 190.

The switching device arrangement 300 comprises a plurality of switching devices 311, 312. Each switching device 311, 312 controls a connection between a different signal line 11, 12 and the same electrode 190 of the ion trap device. In the illustrated example, a first switching device 311 controls a connection between a first signal line 11 and the electrode 190. Similarly, a second switching device 312 control a connection between a second signal line 12 and the electrode 190.

In the illustrated switching device, the plurality of switching devices comprise one fewer dummy capacitance arrangements C_{D} than the number of signal lines for which the plurality of switching devices control a connection to the same electrode. Thus, as the illustrated switching arrangement controls a connection between two signal lines 11, 12 and the electrode 190, the plurality of switching devices comprises a single, shared dummy capacitance arrangement C_{D}. The capacitance arrangement C_{S} is shared between all switching devices.

A capacitance of the dummy capacitance arrangement C_{D} is within 10% of a capacitance of the capacitance arrangement, e.g., within 5% of a capacitance of the capacitance arrangement, e.g., within 1% of a capacitance of the capacitance arrangement. In preferred examples, the capacitance of the dummy capacitance arrangement is substantially equal to the capacitance of the capacitance arrangement.

The switching arrangement S4, S5 of each switching device 311, 312 is configured to selectively connect the signal line to each/any dummy capacitance arrangement in the plurality of switching devices. Thus, each switching arrangement S4, S5 selectively connects the signal line 11, 12 (associated with the corresponding switching device 311, 312) to only one of the electrode 190 and the dummy capacitance arrangement C_{D} (i.e., always one of the two and not both simultaneously).

In this way, the capacitance seen by each signal line will remain substantially constant. The advantages of this approach have been previously mentioned, and are enhanced by application to multiple signal lines.

In the illustrated example, each switching arrangement S4, S5 is embodied as a SPDT switch. However, other approaches will be apparent to the skilled person (e.g., a synchronously controlled pair of SPST switches).

In some examples, the switching arrangement 300 is configured to responsive to a third signal, connect the signal line to a dummy capacitance arrangement to which no other signal line is connected; and responsive to a fourth signal, disconnect the signal line from the dummy capacitance to which it is connected.

The switching arrangement 300 is configured such that only one of the first signal line and second signal line connects to the electrode 190 at a same time. This can be performed using appropriate control of the switching devices 311, 312.

Fig. 4 also illustrates a portion of an ion trap device, illustrating a variant of a switching device arrangement 400. This switching device arrangement 400 is configured for controlling a connection between a plurality of (here: three) signal lines 11, 12, 13 and a (single) electrode 190.

The switching device arrangement 400 comprises a plurality of switching devices 411, 412, 413. Each switching device 411, 412, 413 controls a connection between a different signal line 11, 12, 13 and the same electrode 190 of the ion trap device.

As before, the plurality of switching devices comprise one fewer dummy capacitance arrangements C_{D1}, C_{D2} than the number of signal lines for which the plurality of switching devices control a connection to the same electrode. Thus, as the illustrated switching arrangement controls a connection between three signal lines 11, 12, 13 and the electrode 190, the plurality of switching devices comprises two dummy capacitance arrangements C_{D1}, C_{D2}.

The capacitance arrangement C_{S} is shared between all switching devices.

A capacitance of each dummy capacitance arrangement C_{D1}, C_{D2} is within 10% of a capacitance of the capacitance arrangement, e.g., within 5% of a capacitance of the capacitance arrangement. In preferred examples, the capacitance of the dummy capacitance arrangement is substantially equal to the capacitance of the capacitance arrangement.

The switching arrangement of each switching device 411, 412 is configured to selectively connect the signal line to each/any dummy capacitance arrangement in the plurality of switching devices. Thus, each switching arrangement 411, 412 selectively connects the signal line 11, 12, 13 (associated with the corresponding switching device 411, 412) to only one of: the electrode 190 and one of the dummy capacitance arrangements C_{D1}, C_{D2} (i.e., always one of the two and not both simultaneously).

In this way, the capacitance seen by each signal line will remain substantially constant.

In preferred examples, the switching arrangement 400 is configured so that each dummy capacitance arrangement is connected to only one of the signal lines at a time. This can be achieved through appropriate control of the switching devices. This significantly reduces a risk of (unintentionally) connecting signal lines together and/or overloading a dummy capacitance arrangement.

In the illustrated example, each switching arrangement S4, S5 is embodied using synchronously controlled SPST switches (e.g., transistor(s)). However, other approaches will be apparent to the skilled person.

The switching arrangement 400 is configured such that only one signal line connects to the electrode 190 at a same time. This can be performed using appropriate control of the switching devices.

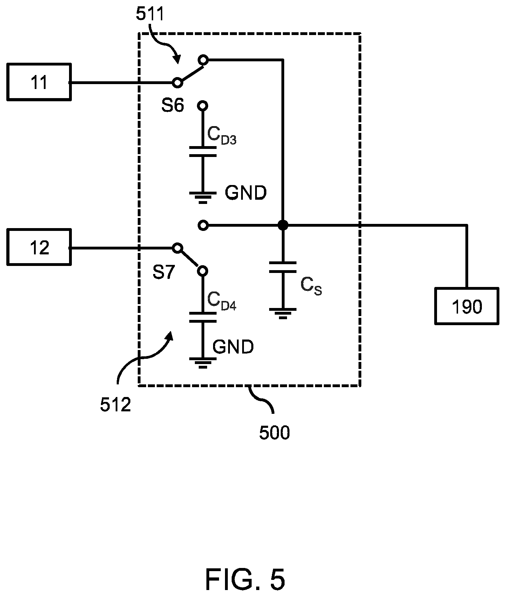

Fig. 5 also illustrates a portion of an ion trap device, illustrating another switching device arrangement 500. This switching device arrangement 500 is configured for controlling a connection between a plurality of (here: two) signal lines 11, 12 and a (single) electrode 190.

In this approach, the switching device arrangement 500 comprises a switching device 511, 512 for each signal line. Each switching device 511, 512 controls a connection between a different signal line 11, 12 and the same electrode 190 of the ion trap device. Moreover, in the illustrated approach, each switching device 511, 512 comprises a different dummy capacitance arrangement C_{D3}, C_{D4}. The capacitance arrangement C_{S} is shared between all switching devices.

The switching arrangement S6, S7 of each switching device is thereby configured to selectively connect the respective signal line 11, 12 (of the switching device) to the electrode 190 (and therefore the capacitance arrangement C_{S}). Each switching arrangement S6, S7 is also configured to selectively connect the signal line to the dummy capacitance arrangement of the switching device.

It will be clear that each switching arrangement is therefore associated with a different signal line and a different dummy capacitance arrangement. However, each switching arrangement is able to connect to a same, shared capacitance arrangement S_{D} and electrode 190.

More particularly, each switching arrangements S6, S7 is configured to selectively connect the respective signal line 11, 12 to only one of the electrode 190 and the dummy capacitance arrangement C_{D1}, C_{D2} associated with the switching arrangement (i.e., always one of the two and not both simultaneously).

In this way, the capacitance seen by each signal line 11, 12 (with respect to the switching device arrangement 500) can be kept substantially the same. More particularly, the change in capacitance seen by each signal line will be reduced compared to approaches in which no dummy capacitance arrangement(s) is/are provided.

By keeping the capacitance of the dummy capacitance arrangement(s) and the capacitance arrangement substantially the same (e.g., within 10%, e.g., within 5%, e.g., within 1%), any change in capacitance seen by the signal lines 11, 12 as a result of connecting or disconnecting the electrode 190 from the signal line(s) 11, 12 is significantly reduced.

The switching arrangement 500 is configured such that only one signal line 11, 12 connects to the electrode 190 at a same time. This can be performed using appropriate control of the switching devices.

The approach illustrated by Fig. 5 can be readily expanded to include more than two switching devices (e.g., for a respective more than two signal lines). In such approaches, each switching device comprises a different switching arrangement, a different dummy capacitance arrangement but a same shared capacitance arrangement (connected to the electrode 190).

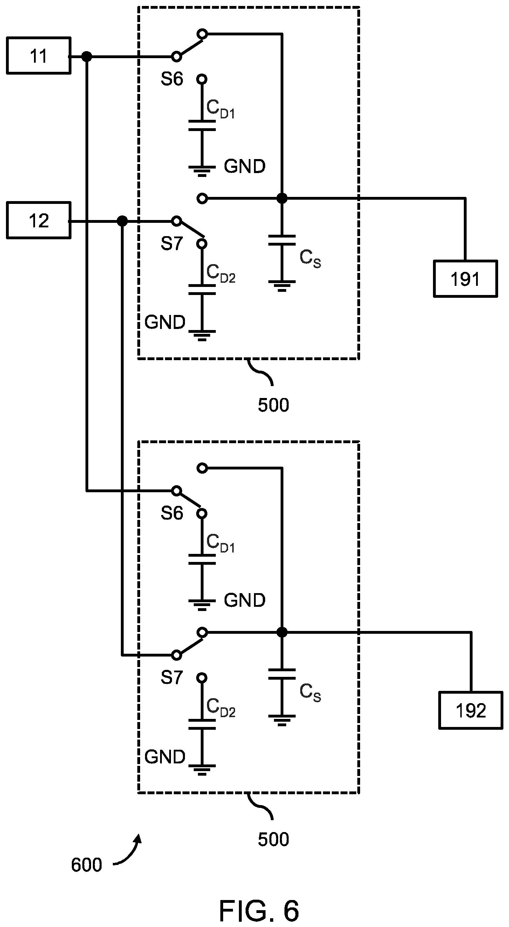

Figure 6 illustrates a portion 600 of an ion trap device comprising a plurality of switching device arrangements 500. Each switching device arrangement is connected between a set of two or more signal lines 11, 12 and a respective (different) electrode 191, 192. In the illustrated example, only two switching device arrangements are illustrated, but the skilled person will appreciate how the ion trap device may comprise any number of switching device arrangements.

In the preceding examples, only a small number (e.g., one or two) of electrodes are illustrated as being driven by a same signal line. This is for the sake of illustrative clarity. It will be appreciated that, in practice, each signal line may be connectable to a large number (e.g., >4, e.g., >10 e.g., >100) number of electrodes.

Similarly, in the preceding examples, only a small number (e.g., one, two or three) of signal lines are illustrated as forming part of the ion trap device. This is for the sake of illustrative clarity. It will be appreciated that, in practice, there may be an extremely large number of signal lines (e.g., >4, e.g., >10 e.g., >100).

Thus, the illustrates portions of the ion trap device may demonstrate only a small portion of the overall trap device.

The preceding description provides a number of example switching devices and switching device arrangements for controlling the connection between one or more signal lines and one or more electrodes. The skilled person would be readily capable of formulating a method or technique for controlling the connection between a signal line and an electrode of an ion trap device based on the preceding description and examples of switching devices or switching device arrangements.

As an example, there is proposed a method for controlling a connection between a signal line and an electrode of an ion trap device. The method comprises disconnecting the signal line from a dummy capacitance arrangement and connecting the signal line to the electrode; and disconnecting the signal line from the electrode and connecting the signal line to the dummy capacitance arrangement. In this approach, a capacitance arrangement is connected between the electrode and a ground or reference voltage; and the dummy capacitance arrangement is connected to the ground or reference voltage, wherein a capacitance of the dummy capacitance arrangement is within 10% (e.g., within 5%, e.g., within 1%) of a capacitance of the capacitance arrangement.

Approaches for controlling the location of an ion within a (containment) region by the controlled application of voltages to electrodes are well known in the art, and are not described in detail for the sake of conciseness.

Accordingly, embodiments also provide an ion trap device for trapping and moving an ion. The ion trap device includes a plurality of electrodes, a plurality of switching devices and/or switching device arrangements and one or more signal lines. Each switching device or switching device arrangement selectively connects one or more of the signal lines to a respective, different electrode. The ion trap device further comprises a control system for controlling the operation of the switching devices and/or switching device arrangements, as well as the signal line/supplies. The ion trap device may further include an RF system configured to provide an RF containment field to contain the ion, as is well established in the art.

Correspondingly, there is also provided a method for moving an ion held by an ion trap device, the method comprising controlling a connection between one or more signal lines and an electrode of the ion trap device using a previously described method. The method for moving the ion may include one or more further steps required for controlling the operation of the signal line/supplies for manipulating the position of the ion, as is well established in the art.

Although specific examples have been illustrated and described herein, it will be appreciated by those of ordinary skill in the art that a variety of alternate and/or equivalent implementations may be substituted for the specific examples shown and described without departing from the scope of the present invention. This application is intended to cover any adaptations or variations of the specific examples discussed herein. Therefore, it is intended that this invention be limited only by the claims.

It should be noted that the methods and devices including its preferred embodiments as outlined in the present document may be used stand-alone or in combination with the other methods and devices disclosed in this document. In addition, the features outlined in the context of a device are also applicable to a corresponding method, and vice versa. Furthermore, all aspects of the methods and devices outlined in the present document may be arbitrarily combined. In particular, the features of the claims may be combined with one another in an arbitrary manner.

It should be noted that the description and drawings merely illustrate the principles of the proposed methods and systems. Those skilled in the art will be able to implement various arrangements that, although not explicitly described or shown herein, are included within the scope of the invention, which is defined in the appended claims. Furthermore, all examples and embodiments outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

## Claims

1. An ion trap device comprising at least one switching device (100) for controlling a connection between a signal line (10) and an electrode (190) for the ion trap device, each switching device comprising:
a capacitance arrangement (C_{S}) connected between the electrode and a ground or reference voltage (GND);
a dummy capacitance arrangement (C_{D}) connected to the ground or reference voltage, wherein a capacitance of the dummy capacitance arrangement is within 10% of a capacitance of the capacitance arrangement; and
a switching arrangement (110) configured to selectively connect the signal line to the electrode of the ion trap device and selectively connect the signal line to the dummy capacitance arrangement.

2. The ion trap device of claim 1, wherein the switching arrangement of each switching device is configured to:
responsive to a first signal, disconnect the signal line from the dummy capacitance arrangement and connect the signal line to the electrode; and
responsive to a second signal, disconnect the signal line from the electrode and connect the signal line to the dummy capacitance arrangement.

3. The ion trap device of claim 2, wherein, for each switching device, the first signal is an indication to connect the signal line to the electrode.

4. The ion trap device of claim 2 or 3, wherein, for each switching device, the second signal is an indication to disconnect the signal line from the electrode.

5. The ion trap device of any of claims 1 to 4, wherein the switching arrangement of each switching device comprises a single pole double throw switch.

6. The ion trap device of any one of claims 1 to 5, wherein the dummy capacitance arrangement of each switching device is electrically isolated from the capacitance arrangement of said switching device.

7. The ion trap device of any one of claims 1 to 6, wherein, for each switching device, the capacitance of the dummy capacitance arrangement is within 5% of a capacitance of the capacitance arrangement

8. The ion trap device of any one of claims 1 to 7, wherein the physical position of the capacitance arrangement is proximate to the physical position of the dummy capacitance arrangement.

9. The ion trap device of any of claims 1 to 8, comprising one or more switching device arrangements, wherein:
each switching device arrangement comprises a plurality of switching devices; and
each switching device of a same switching device arrangement controls a connection between a different signal line and the same electrode of the ion trap device.

10. The ion trap device of claim 9, wherein, for each switching device arrangement:
the plurality of switching devices comprise one fewer dummy capacitance arrangements than the number of signal lines for which the plurality of switching devices control a connection to the same electrode; and
the switching arrangement of each switching device is configured to selectively connect the signal line to any dummy capacitance arrangement in the plurality of switching devices.

11. The ion trap device of claim 10, wherein, for each switching device arrangement, the switching arrangement of each switching device is configured to:
responsive to a third signal, connect the signal line to a dummy capacitance arrangement to which no other signal line is connected; and
responsive to a fourth signal, disconnect the signal line from the dummy capacitance to which it is connected.

12. The ion trap device of claim 9, wherein each switching device comprises a different dummy capacitance arrangement.

13. The ion trap device of any of claims 9 to 12, wherein each switching device arrangement comprises only two switching devices.

14. A method for controlling a connection between a signal line and an electrode of an ion trap device, the method comprising:
disconnecting the signal line from a dummy capacitance arrangement and connecting the signal line to the electrode; and
disconnecting the signal line from the electrode and connecting the signal line to the dummy capacitance arrangement,
wherein:
a capacitance arrangement is connected between the electrode and a ground or reference voltage; and
the dummy capacitance arrangement is connected to the ground or reference voltage, wherein a capacitance of the dummy capacitance arrangement is within 10% of a capacitance of the capacitance arrangement.

15. A method for moving an ion held by an ion trap device, the method comprising controlling a connection between one or more signal lines and an electrode of the ion trap device using the method of claim 14.

## Patentansprüche

1. lonenfallenvorrichtung, die mindestens eine Schaltvorrichtung (100) zum Steuern einer Verbindung zwischen einer Signalleitung (10) und einer Elektrode (190) für die lonenfallenvorrichtung umfasst, wobei jede Schaltvorrichtung Folgendes umfasst:
eine Kapazitätsanordnung (C_{S}), die zwischen die Elektrode und eine Masse- oder Referenzspannung (GND) geschaltet ist;
eine Dummy-Kapazitätsanordnung (C_{D}), die mit der Masse- oder Referenzspannung verbunden ist, wobei eine Kapazität der Dummy-Kapazitätsanordnung innerhalb von 10 % einer Kapazität der Kapazitätsanordnung liegt; und
eine Schaltanordnung (110), die eingerichtet ist, die Signalleitung selektiv mit der Elektrode der lonenfallenvorrichtung zu verbinden und die Signalleitung selektiv mit der Dummy-Kapazitätsanordnung zu verbinden.

2. lonenfallenvorrichtung nach Anspruch 1, wobei die Schaltanordnung jeder Schaltvorrichtung eingerichtet ist:
als Reaktion auf ein erstes Signal die Signalleitung von der Dummy-Kapazitätsanordnung zu trennen und die Signalleitung mit der Elektrode zu verbinden; und
als Reaktion auf ein zweites Signal die Signalleitung von der Elektrode zu trennen und die Signalleitung mit der Dummy-Kapazitätsanordnung zu verbinden.

3. lonenfallenvorrichtung nach Anspruch 2, wobei für jede Schaltvorrichtung das erste Signal eine Anzeige ist, die Signalleitung mit der Elektrode zu verbinden.

4. lonenfallenvorrichtung nach Anspruch 2 oder 3, wobei für jede Schaltvorrichtung das zweite Signal eine Anzeige ist, die Signalleitung von der Elektrode zu trennen.

5. lonenfallenvorrichtung nach einem der Ansprüche 1 bis 4, wobei die Schaltanordnung jeder Schaltvorrichtung einen einpoligen Wechselschalter umfasst.

6. lonenfallenvorrichtung nach einem der Ansprüche 1 bis 5, wobei die Dummy-Kapazitätsanordnung jeder Schaltvorrichtung von der Kapazitätsanordnung der Schaltvorrichtung elektrisch isoliert ist.

7. lonenfallenvorrichtung nach einem der Ansprüche 1 bis 6, wobei für jede Schaltvorrichtung die Kapazität der Dummy-Kapazitätsanordnung innerhalb von 5 % einer Kapazität der Kapazitätsanordnung liegt.

8. lonenfallenvorrichtung nach einem der Ansprüche 1 bis 7, wobei die physikalische Position der Kapazitätsanordnung in der Nähe der physikalischen Position der Dummy-Kapazitätsanordnung liegt.

9. lonenfallenvorrichtung nach einem der Ansprüche 1 bis 8, die eine oder mehrere Schaltvorrichtungsanordnungen umfasst, wobei:
jede Schaltvorrichtungsanordnung eine Vielzahl von Schaltvorrichtungen umfasst; und
jede Schaltvorrichtung einer gleichen Schaltvorrichtungsanordnung eine Verbindung zwischen einer anderen Signalleitung und der gleichen Elektrode der lonenfallenvorrichtung steuert.

10. lonenfallenvorrichtung nach Anspruch 9, wobei für jede Schaltvorrichtungsanordnung:
die Vielzahl von Schaltvorrichtungen eine Dummy-Kapazitätsanordnungen weniger als die Anzahl von Signalleitungen umfasst, für die die Vielzahl von Schaltvorrichtungen eine Verbindung zu der gleichen Elektrode steuert; und
die Schaltanordnung jeder Schaltvorrichtung eingerichtet ist, die Signalleitung selektiv mit einer beliebigen Dummy-Kapazitätsanordnung in der Vielzahl von Schaltvorrichtungen zu verbinden.

11. lonenfallenvorrichtung nach Anspruch 10, wobei für jede Schaltvorrichtungsanordnung die Schaltanordnung jeder Schaltvorrichtung eingerichtet ist:
als Reaktion auf ein drittes Signal die Signalleitung mit einer Dummy-Kapazitätsanordnung zu verbinden, mit der keine andere Signalleitung verbunden ist; und
als Reaktion auf ein viertes Signal die Signalleitung von der Dummy-Kapazität zu trennen, mit der sie verbunden ist.

12. lonenfallenvorrichtung nach Anspruch 9, wobei jede Schaltvorrichtung eine andere Dummy-Kapazitätsanordnung umfasst.

13. lonenfallenvorrichtung nach einem der Ansprüche 9 bis 12, wobei jede Schaltvorrichtungsanordnung nur zwei Schaltvorrichtungen umfasst.

14. Verfahren zum Steuern einer Verbindung zwischen einer Signalleitung und einer Elektrode einer lonenfallenvorrichtung, wobei das Verfahren Folgendes umfasst:
Trennen der Signalleitung von einer Dummy-Kapazitätsanordnung und Verbinden der Signalleitung mit der Elektrode; und
Trennen der Signalleitung von der Elektrode und Verbinden der Signalleitung mit der Dummy-Kapazitätsanordnung, wobei:
eine Kapazitätsanordnung zwischen die Elektrode und eine Masse- oder Referenzspannung geschaltet ist; und
die Dummy-Kapazitätsanordnung mit der Masse- oder Referenzspannung verbunden ist, wobei eine Kapazität der Dummy-Kapazitätsanordnung innerhalb von 10 % einer Kapazität der Kapazitätsanordnung liegt.

15. Verfahren zum Bewegen eines Ions, das von einer lonenfallenvorrichtung gehalten wird, wobei das Verfahren das Steuern einer Verbindung zwischen einer oder mehreren Signalleitungen und einer Elektrode der lonenfallenvorrichtung unter Verwendung des Verfahrens nach Anspruch 14 umfasst.

## Revendications

1. Un dispositif de piège à ions comprenant au moins un dispositif (100) de commutation pour commander une connexion entre une ligne (10) de signal et une électrode (190) pour un dispositif de pièce à ions, chaque dispositif de commutation comprenant :
un montage (C_{S}) de capacité monté entre l'électrode et une masse ou une tension (GND) de référence ;
un montage (C_{D}) de capacité fictif connecté à la masse ou à la tension de référence, une capacité du montage de capacité fictif étant en deçà de 10 % d'une capacité du montage de capacité ; et
un montage (110) de commutation configuré pour connecter sélectivement la ligne de signal à l'électrode du dispositif de piège à ions et connecter sélectivement la ligne de signal au montage de capacité fictif.

2. Le dispositif de piège à ions de la revendication 1, dans lequel le montage de commutation de chaque dispositif de commutation est configuré pour :
en réaction à un premier signal, déconnecter la ligne de signal du montage de capacité fictif et connecter la ligne de signal à l'électrode ; et
en réaction à un deuxième signal, déconnecter la ligne de signal de l'électrode et connecter la ligne de signal au montage de capacité fictif.

3. Le dispositif de piège à ions de la revendication 2, dans lequel, pour chaque dispositif de commutation, le premier signal est une indication de connecter la ligne de signal à l'électrode.

4. Le dispositif de piège à ions de la revendication 2 ou 3, dans lequel, pour chaque dispositif de commutation, le deuxième signal est une indication de déconnecter la ligne de signal de l'électrode.

5. Le dispositif de piège à ions de l'une quelconque des revendications 1 à 4, dans lequel le montage de commutation de chaque dispositif de commutation comprend un interrupteur à double bascule monopolaire.

6. Le dispositif de piège à ions de l'une quelconque des revendications 1 à 5, dans lequel le montage de capacité fictif de chaque dispositif de commutation est isolé électriquement du montage de capacité dudit dispositif de commutation.

7. Le dispositif de pièce à ions de l'une quelconque des revendications 1 à 6, dans lequel, à chaque dispositif de commutation, la capacité du montage de capacité fictif est en deçà de 5 % d'une capacité du montage de capacité.

8. Le dispositif de piège à ions de l'une quelconque des revendications 1 à 7, dans lequel la position physique du montage de capacité est proche de la position physique du montage de capacité fictif.

9. Le dispositif de piège à ions de l'une quelconque des revendications 1 à 8, comprenant un ou plusieurs montages de dispositifs de commutation, dans lequel :
chaque montage de dispositif de commutation comprend une pluralité de dispositifs de commutation ; et
chaque dispositif de commutation d'un même montage de dispositif de commutation commande une connexion entre une ligne de signal différente et la même électrode du dispositif de piège à ions.

10. Le dispositif de piège à ions de la revendication 9, dans lequel, pour chaque montage de dispositif de commutation :
la pluralité de dispositifs de commutation comprend un montage de capacité fictif de moins que le nombre de lignes de signal, pour lequel la pluralité de dispositifs de commutation commande une connexion à la même électrode ; et
l'agencement de commutation de chaque dispositif de commutation est configuré pour connecter sélectivement la ligne de signal à n'importe quel montage de capacité fictif de la pluralité de dispositifs de commutation.

11. Le dispositif de piège à ions de la revendication 10, dans lequel, pour chaque montage de dispositif de commutation, le montage de commutation de chaque dispositif de commutation est configuré pour :
en réaction à un troisième signal, connecter la ligne de signal à un montage de capacité fictif auquel une autre ligne de signal n'est pas connectée ; et
en réaction à un quatrième signal, déconnecter la ligne de signal de la capacité fictive à laquelle elle est connectée.

12. Le dispositif de piège à ions de la revendication 9, dans lequel chaque dispositif de commutation comprend un montage de capacité fictif différent.

13. Le dispositif de piège à ions de l'une quelconque des revendications 9 à 12, dans lequel chaque montage de dispositif de commutation comprend seulement deux dispositifs de commutation.

14. Un procédé de commande d'une connexion entre une ligne de signal et une électrode d'un dispositif de piège à ions, le procédé comprenant :
déconnecter la ligne de signal d'un montage de capacité fictif et connecter la ligne de signal à l'électrode ; et
déconnecter la ligne de signal à l'électrode et connecter la ligne de signal au montage de capacité fictif,
dans lequel :
un montage de capacité est monté entre l'électrode et une terre ou une tension de référence ; et
le montage de capacité fictif est connecté à la terre ou à la tension de référence, une capacité du montage de capacité fictif étant en deçà de 10 % d'une capacité du montage de capacité.

15. Un procédé de déplacement d'un ion tenu par un dispositif de piège à ions, le procédé comprenant commander une connexion entre une ou plusieurs lignes de signal et une électrode du dispositif de piège à ions en utilisant le procédé de la revendication 14.
